# EUROPÄISCHE PATENTANMELDUNG

(11) **EP 4 194 522 A1**
(43) Veröffentlichungstag der Anmeldung: **14.06.2023**
(21) Anmeldenummer: 22212618.7
(22) Anmeldetag: 09.12.2022
(51) Int. Cl.: C09D 175/04, B05D 5/00, C08K 3/36, C08K 3/04, C08L 9/02, E04B 1/94, C08L 75/04

(54) **DÄMMSCHICHTBILDNER, ANORDNUNG MIT DÄMMSCHICHTBILDNER UND HOLZELEMENT UND VERWENDUNG EINES DÄMMSCHICHTBILDNER IM HOLZBAU**

(30) Priorität: 09.12.2021 DE 102021132538
(71) Anmelder: Rex Industrie-Produkte Graf von Rex GmbH, 74541 Vellberg (DE)
(72) Erfinder: Witzsche, Marion, 74423 Obersontheim (DE); Wetzel, Andreas, 74523 Schwäbisch Hall (DE); Meding, Carsten, 74541 Vellberg (DE)
(74) Vertreter: Ter Meer Steinmeister & Partner

(57) **Zusammenfassung**

Die vorliegende Erfindung betrifft einen Dämmschichtbildner (1), insbesondere zur brandschützenden Abdichtung im Holzbau. Weiter betrifft die Erfindung einen Dämmschichtbildner (1) und eine Anordnung umfassend einen Dämmschichtbildner (1) und ein Holzelement (16a, 16b).

## Beschreibung

### Gebiet der Erfindung

Die vorliegende Erfindung betrifft einen Dämmschichtbildner, insbesondere zur brandschützenden Abdichtung im Holzbau. Weiter betrifft die Erfindung einen Dämmschichtbildner und eine Anordnung umfassend einen Dämmschichtbildner und ein Holzelement.

### Hintergrund der Erfindung

Die Verwendung von Holz im Baubereich hat in den vergangenen Jahren stark zugenommen. Bei der Verwendung von Holz im Innenausbau müssen Brandschutzvorschriften eingehalten werden. Dazu wird Holz üblicherweise verkleidet, laminiert oder mit Fugenspachtel, Mineralwolle-Streifen und/oder Schaumstoff-Streifen brandschützend abgedichtet.

Es ist allgemein bekannt im Baugewerbe für den Brandschutz Dichtbändern aus Dämmschichtbildner einzusetzen. Die Dichtbänder schäumen im Brandfall unter Einwirkung von hohen Temperaturen auf und minimieren so die Wärme, Sauerstoff- und Rauch-Durchlässigkeit. Dadurch lässt sich u.a. ein Durchbrennen verhindern oder verlangsamen.

Aufgrund der hohen Brennbarkeit und Entflammbarkeit von Holzelementen sowie der Oberflächenstruktur von Holz wurden bisher keine Dichtbänder im Holzbau eingesetzt. Da die Oberflächenstruktur von Holz uneben ist, war sowohl die Befestigung als auch die zuverlässige Abdichtung im Brandfall mit Dichtbändern problematisch.

Bekannte Dämmschichtbildner, die im Stahl- oder Betonbau eingesetzt werden, enthalten üblicherweise eine Säurequelle (wie Phosphorsäure, Schwefelsäure, Borsäure, Ammoniumsalze, Phosphate, Polyphosphate, Borate, Polyborate, Sulfate, Phosphate von Aminen oder Amiden, Alkylphosphate, oder Halogenalkylphosphate), eine Kohlenstoffquelle (wie Stärke, Dextrin, Sorbitol, Mannitol, Pentaerythritol, Phenol-Formaldehyd-Harze, Polyamide, Polycarbonate oder Polyurethane) und ein Treibmittel (wie Harnstoff, Harnstoff-Formaldehyd-harze, Dicyandiamid oder Melamin). Dabei reagieren die Säurequelle und die Kohlenstoffquelle ab einer gewissen Temperatur und bilden - wie auch das Treibmittel - Gase, was zu Schaumbildung und Intumeszenz führt. Allerdings sind diese Dämmschichtbildner aus dem Stahl- oder Betonbau nicht für die Verwendung im Holzbau konzipiert.

Aufgabe der vorliegenden Erfindung ist daher die Bereitstellung eines Dämmschichtbildners, insbesondere in Form eines Bandes, welcher den spezifischen Anforderungen im Holzbau Rechnung trägt, schnell aufschäumt und Zwischenräume oder Hohlräume, insbesondere von Holzoberflächen, zuverlässig abdichtet, sodass Flammen- und Rauchaustritt verhindert wird und eine Wärmeausbreitung vermieden wird.

Eine weitere Aufgabe ist es einen Dämmschichtbildner bereitzustellen, welcher den hohen bauaufsichtlichen Zulassungsbedingungen im Holzbau genügt.

Eine weitere Aufgabe ist es einen Dämmschichtbildner bereitzustellen, welcher einfach und effizient zu montieren ist. Eine weitere Aufgabe der vorliegenden Erfindung war es, einen Dämmschichtbildner bereitzustellen, der die Optik der verbauten Elemente nicht beeinträchtigt.

### Zusammenfassung der Erfindung

Diese Aufgabe wird durch die Merkmale der unabhängigen Ansprüche gelöst. Vorteilhafte Ausgestaltungen sind in den Unteransprüchen angegeben.

In einem ersten Aspekt wird die Verwendung eines Dämmschichtbildners zur brandschützenden Abdichtung im Holzbau angegeben, wobei der Dämmschichtbildner eine Dichtschicht umfassend
a) 10-60 Gew.-% Blähgraphit, und
b) 20-70 Gew.-% Polyurethan-Polymer; sowie eine Trägermaterial-Schicht umfasst.

Vorzugsweise umfasst die Trägermaterial-Schicht ein Glasfasergewebe und/oder ein Polyestervlies und/oder ein Glasgelege. Die Trägermaterial-Schicht kann ein Gewebe, ein Vlies und/oder ein Gelege umfassen. Das Vlies kann ein Kunststoffvlies sein.

Der Anteil von Blähgraphit in der Dichtschicht kann zwischen 15 und 55 Gew.-%, bevorzugt zwischen 20 und 50 Gew.-%, bevorzugter zwischen 25 und 45 Gew.-%, bevorzugter zwischen 30 und 40 Gew.-%, liegen.

Der Anteil von Polyurethan-Polymer kann zwischen 25 und 65 Gew.-%, bevorzugt zwischen 30 und 60 Gew.-%, bevorzugter zwischen 35 und 55 Gew.-%, bevorzugter zwischen 40 und 50 Gew.- %, liegen.

Vorzugsweise umfasst die Dichtschicht
c) 5-20 Gew.-% Copolymer erhältlich aus Vinylacetat, Ethylen und Acrylsäureester.

Der Anteil des Copolymers erhältlich aus Vinylacetat, Ethylen und Acrylsäureester in der Dichtschicht kann zwischen 6 und 19 Gew.-%, bevorzugt zwischen 7 und 18 Gew.-%, bevorzugter zwischen 8 und 17 Gew.-%, bevorzugter zwischen 9 und 16 Gew.-%, bevorzugter zwischen 10 und 15 Gew.-%, bevorzugter zwischen 11 und 14 Gew.-%, bevorzugter zwischen 12 und 13 Gew.-%, liegen.

Vorzugsweise umfasst die Dichtschicht weiter
d) 5-20 Gew.-% Acrylnitril- Butadien-Kautschuk, und/oder
e) 2- 15 Gew.-% amorphes Silica.

Der Anteil des Acrylnitril-Butadien-Kautschuk in der Dichtschicht kann zwischen 6 und 19 Gew.- %, bevorzugt zwischen 7 und 18 Gew.-%, bevorzugter zwischen 8 und 17 Gew.-%, bevorzugter zwischen 9 und 16 Gew.-%, bevorzugter zwischen 10 und 15 Gew.-%, bevorzugter zwischen 11 und 14 Gew.-%, bevorzugter zwischen 12 und 13 Gew.-%, liegen.

Der Anteil des amorphen Silica in der Dichtschicht kann zwischen 3 und 14 Gew.-%, bevorzugt zwischen 4 und 13 Gew.-%, bevorzugter zwischen 5 und 12 Gew.-%, bevorzugter zwischen 6 und 11 Gew.-%, bevorzugter zwischen 7 und 10 Gew.-%, bevorzugter zwischen 8 und 9 Gew.-%, liegen.

In einer weiteren vorteilhaften Ausgestaltung kann der Dämmschichtbildner in einem Zwischenraum oder in einer Fuge zwischen zwei Bauelementen angebracht werden. Dabei ist wenigstens eines der Bauelemente ein Holzelement.

Das Holzelement kann ein Holzelement eines Gebäudes, z.B. eines Hauses, sein. Das Holzelement kann ein Gewicht von zumindest 10 kg, bevorzugt zumindest 25 kg, bevorzugter zumindest 50 kg, bevorzugter zumindest 75 kg, bevorzugter zumindest 100 kg, bevorzugter zumindest 150 kg, bevorzugter zumindest 200 kg, aufweisen. Jedes hierin offenbarte Holzelement kann ein Holzelement eines Gebäudes sein und/oder das beschriebene Gewicht aufweisen.

In einer weiteren vorteilhaften Ausgestaltung kann der Dämmschichtbildner eine Selbstklebe-Schicht, bevorzugt aus Polyacrylat, umfassen. Dadurch lässt sich der Dämmschichtbildner einfach auf den Oberflächen der zu verbindenden Elementen befestigen.

In einem weiteren Aspekt der vorliegenden Erfindung wird ein Dämmschichtbildner angegeben, der eine Dichtschicht umfasst. Die Dichtschicht kann dabei
a) 10-60 Gew.-% Blähgraphit, und
b) 20-70 Gew.-% Polyurethan-Polymer;
sowie eine Trägermaterial-Schicht umfassen.

Die Trägermaterial-Schicht kann bspw. ein Polyestervlies und/oder ein Glasgelege umfassen.

Der Anteil von Blähgraphit in der Dichtschicht kann zwischen 15 und 55 Gew.-%, bevorzugt zwischen 20 und 50 Gew.-%, bevorzugter zwischen 25 und 45 Gew.-%, bevorzugter zwischen 30 und 40 Gew.-%, liegen.

Der Anteil von Polyurethan-Polymer kann zwischen 25 und 65 Gew.-%, bevorzugt zwischen 30 und 60 Gew.-%, bevorzugter zwischen 35 und 55 Gew.-%, bevorzugter zwischen 40 und 50 Gew.- %, liegen.

In einem weiteren Aspekt der vorliegenden Erfindung wird eine Anordnung angegeben, umfassend einen Dämmschichtbildner und ein Holzelement. Der Dämmschichtbildner umfasst eine Dichtschicht, umfassend
a) 10-60 Gew.-% Blähgraphit, und
b) 20-70 Gew.-% Polyurethan-Polymer; sowie
eine Trägermaterial-Schicht.

Vorzugsweise ist der Dämmschichtbildner auf dem Holzelement angebracht.

Der Anteil von Blähgraphit in der Dichtschicht kann zwischen 15 und 55 Gew.-%, bevorzugt zwischen 20 und 50 Gew.-%, bevorzugter zwischen 25 und 45 Gew.-%, bevorzugter zwischen 30 und 40 Gew.-%, liegen.

Der Anteil von Polyurethan-Polymer kann zwischen 25 und 65 Gew.-%, bevorzugt zwischen 30 und 60 Gew.-%, bevorzugter zwischen 35 und 55 Gew.-%, bevorzugter zwischen 40 und 50 Gew.- %, liegen.

Vorzugsweise kann die Anordnung, weiterhin ein Bauelement umfassen, das so angeordnet ist, dass sich eine Fuge oder Zwischenraum zwischen dem Bauelement und dem Holzelement bildet.

Vorzugsweise kann der Dämmschichtbildner in der Fuge oder dem Zwischenraum angebracht sein.

Vorzugsweise kann der Abstand der Fuge oder des Zwischenraums maximal 15 mm betragen. Vorzugsweise kann der Dämmschichtbildner eine Dicke von 0,5 bis 3 mm aufweisen.

Vorzugsweise füllt der Dämmschichtbildner den Zwischenraum oder die Fuge im nicht aufgeschäumten Zustand nur teilweise aus. Somit ist die Optik der verbundenen Elemente nicht beeinträchtigt.

Vorzugsweise kann die Trägermaterialschicht dünner als die Dichtschicht ausgebildet sein.

Es wurde überraschenderweise gefunden, dass der erfindungsgemäße Dämmschichtbildner im Holzbau verwendet werden kann und die obengenannten Aufgaben löst.

Insbesondere wird durch den erfindungsgemäßen Dämmschichtbildner die Brandweiterleitung in Holzbauten verhindert. Des Weiteren hat der erfindungsgemäße Dämmschichtbildner ein dem Holz ähnliches Reibverhalten und lässt sich somit einfach und effizient einbauen, ohne dass es Probleme beim Verschieben von Bauteilen während der Montage gibt.

Des Weiteren ist der erfindungsgemäße Dämmschichtbildner nicht so schwer wie die herkömmliche Verkleidung im Holzbau, weshalb sich der Dämmschichtbildner auch für Bauten mit geringer Traglast anbietet.

Außerdem wird die Optik der verbauten Holzelemente nicht durch den erfindungsgemäßen Dämmschichtbildner beeinträchtigt.

### Kurze Beschreibung der Zeichnungen

Fig. 1 zeigt eine Anordnung umfassend einen Dämmschichtbildner zur Abdichtung einer Fuge zwischen zwei Bauelementen.
Fig. 2 zeigt einen Dämmschichtbildner gemäß einer ersten Ausführungsform umfassend eine Dichtschicht und eine Trägermaterial-Schicht.
Fig. 3 zeigt einen Dämmschichtbildner gemäß einer zweiten Ausführungsform umfassend eine Dichtschicht, eine Selbstklebe-Schicht und eine Trägermaterial-Schicht.

### Detaillierte Beschreibung der Erfindung

Nachfolgend werden bevorzugte Ausführungsformen der vorliegenden Erfindung detailliert mit Bezug auf die Figuren beschrieben. Jede bevorzugte Ausführungsform kann für sich allein oder in Kombination mit weiteren Ausführungsformen verwirklicht werden. Ferner beziehen sich die Erläuterungen zu bevorzugten Ausführungsformen auf alle Aspekte der vorliegenden Erfindung, d. h. auf die Verwendung eines Dämmschichtbildners, den Dämmschichtbildern, sowie die Anordnung umfassend den Dämmschichtbildner und ein Holzelement.

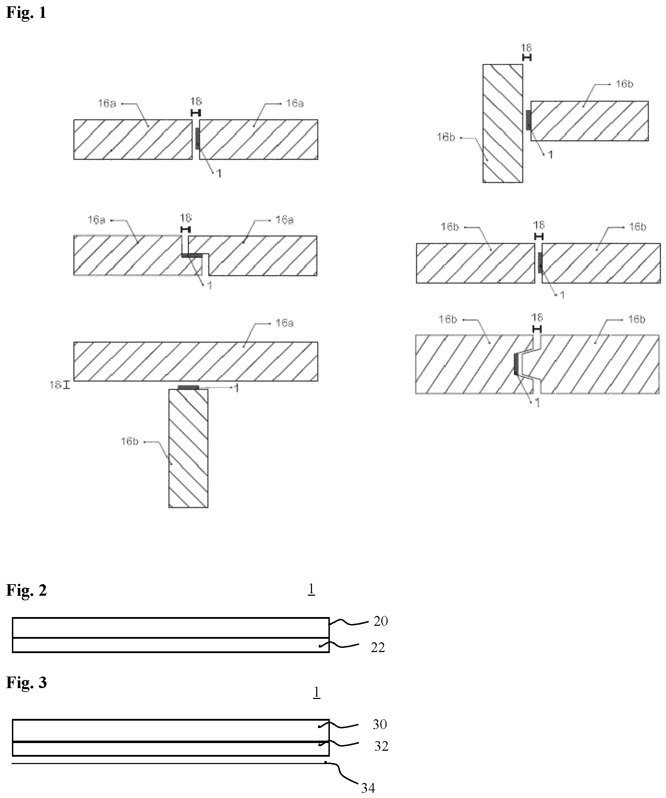

In Fig. 1 sind mehrere verschiedene Anordnungen dargestellt, bei denen ein Dämmschichtbildner 1 zur Abdichtung einer Fuge 18 zwischen zwei Bauelementen 16a, 16b aus Holz eingefügt ist. Es ist für jede dieser Anordnungen bevorzugt, dass der Dämmschichtbildner zentral, d.h. mittig, angeordnet ist.

Fig. 1 zeigt links oben eine Anordnung, in der eine vertikale Fuge 18 zwischen zwei Bauelementen 16a gebildet wird. Die beiden Bauelemente 16A bilden eine raumabschließende Decke. Der Dämmschichtbildner 1 ist dabei an einem der beiden Bauelemente 16A angebracht. Der Dämmschichtbildner 1 füllt die vertikale, lineare Fuge 18 nur teilweise aus. Es ist jedoch auch möglich, im oberen und unteren Bereich an dem linken Bauelement 16a ebenso einen Dämmschichtbildner 1 anzuordnen. Bei der in Fig. 1 dargestellten Variante liegt der Dämmschichtbildner 1 bündig an der in den Raum gerichteten Fläche, um somit im Brandfall die Fuge sicher auszuschäumen und keine Angriffsfläche für die Flammen zu bilden und die Fuge 18 abzudichten. Es ist besonders bevorzugt, dass der Dämmschichtbildner zentral in der Fuge angeordnet ist. Dies gewährleistet einen besonders zuverlässigen Brandschutz. Somit ist es bevorzugt, dass der Dämmschichtbildner in der vertikalen Höhe zentral, d.h. auf mittlerer Höhe, angebracht ist.

Fig. 1 zeigt links mittig eine Anordnung, in der eine vertikale versprungene Fuge 18 zwischen zwei Bauelementen 16a gebildet wird. Die Fuge 1 ist als eine Stufenfuge ausgebildet, wobei die horizontalen Ebenen der Stufe aufeinander aufliegen und keine Fuge bilden. Auch hier liegt der Dämmschichtbildner 1 bündig an der in den Raum gerichteten Fläche, um die Fuge im Brandfall sicher auszuschäumen und keine Angriffsfläche für die Flammen zu bilden und die Fuge 18 abzudichten.

Links unten in Fig. 1 ist eine Anordnung gezeigt, bei der eine horizontale Fuge 18 zwischen zwei Bauelementen 16a, 16b gebildet wird. Das Bauelement 16b kann eine Wand bilden und stößt von unten an das Deckenelement 16a an. Der Dämmschichtbildner 1 ist auf der raumabschließenden Wand 16b angebracht. Der Dämmschichtbildner 1 füllt die horizontale Fuge 18 nur teilweise aus. Es ist besonders bevorzugt, dass der Dämmschichtbildner zentral in der Fuge angeordnet ist. Dies gewährleistet einen besonders zuverlässigen Brandschutz. Somit ist es bevorzugt, dass der Dämmschichtbildner in der vertikalen Breite zentral, d.h. auf mittlerer Breite, angebracht ist.

Es ist nicht dargestellt, aber auch eine mögliche Realisierung, dass die Fuge 18 in der Mitte des Wandbauelements 16b als Nut ausgebildet ist, in die der Dämmschichtbildner 1 eingesetzt wird. Somit liegen die Außenbereiche des Wandbauelements 16b an dem Deckenbauelement 16a an und dichten mit diesem bündig ab. Im Brandfall würde der Dämmschichtbildner 1 aufgrund der Hitze aufschäumen und die Fuge 18 verschließen.

Fig. 1 zeigt rechts oben eine Anordnung, bei der eine vertikale Fuge 18 zwischen zwei Bauelementen 16b gebildet wird, wobei beide Bauelemente 16b beispielsweise als raumabschließende Wand dienen und in einer Draufsicht von oben dargestellt sind. Alternativ können die Bauelemente eine senkrecht verlaufende Wand und ein waagerecht anschließendes Deckenbauelement darstellen. Eines der Bauelemente 16b stößt stumpf auf eine Fläche des anderen Bauelements 16b. Der Dämmschichtbildner 1 ist auf einem der beiden Bauelemente 16b angebracht. Der Dämmschichtbildner 1 füllt die vertikale, lineare Fuge 18 nur teilweise aus. Vorzugsweise schließt der Dämmschichtbildner 1 bündig auf der in den Raum gerichteten Fläche ab. Es ist besonders bevorzugt, dass der Dämmschichtbildner zentral in der Fuge angeordnet ist.

Fig. 1 zeigt rechts mittig eine Anordnung, bei der eine vertikale Fuge 18 zwischen zwei Bauelementen 16b gebildet wird. Die beiden Bauelemente 16b bilden eine raumabschließende Wand 16b und sind in einer Draufsicht von oben dargestellt. Hier stoßen die beiden Bauelemente 16b mit ihren Stirnseiten aufeinander. Der Dämmschichtbildner 1 ist nur auf einer der beiden Bauelemente 16b angebracht. Der Dämmschichtbildner füllt die vertikale, lineare Fuge 18 nur teilweise aus. Es ist besonders bevorzugt, dass der Dämmschichtbildner zentral in der Fuge angeordnet ist.

Fig. 1 zeigt rechts unten eine Anordnung, bei der eine vertikale Fuge 18 zwischen zwei Bauelementen 16b gebildet wird, wobei beide Bauelemente 16b eine raumabschließende Wand 16b darstellen.

Die Stirnseiten der Bauelemente 16b sind als Vorsprung und Nut ausgebildet, wobei die Nut der Breite des Dämmschichtbildner 1 entspricht. Im zusammengesetzten Zustand der beiden Bauelemente 16b ist ein Spalt im Bereich der Fuge 18 gebildet, der zur Aufnahme des Dämmschichtbildner 1 dient und im Brandfall vom aufquellenden Dämmschichtbildner 1 ausgeschäumt wird.

Die anderen Grenzflächen der beiden Bauelemente 16b liegen aneinander an. Der Dämmschichtbildner 1 ist auf einem Bauelemente 16b angebracht. Der Dämmschichtbildner 1 füllt die Nut-Feder-Fuge 18 nur teilweise aus. Es ist besonders bevorzugt, dass der Dämmschichtbildner zentral in der Fuge angeordnet ist.

In Fig. 2 und 3 sind unterschiedliche Ausgestaltungen der Dämmschichtbildner 1 näher beschrieben. Der Dämmschichtbildner 1 gemäß Fig 2. umfasst eine Dichtschicht 20 und eine Trägermaterial-Schicht 22. Die Trägermaterialschicht 22 ist dabei dünner als die Dichtschicht 20. Die Trägermaterialschicht kann eine Dicke von 0,2 - 0,6 mm aufweisen. Die Dichtschicht kann eine Dicke von 1 - 3 mm aufweisen. Der Dämmschichtbildner 1 kann bandartig ausgestaltet sein und als Rollenmaterial gelagert werden.

Aufgrund der Flexibilität des Trägermaterials und des Anteils an Polymeren (Komponenten b, c, und d) im Dichtstoff lässt sich der Dämmschichtbildner 1 aufrollen, ohne dass die Dichtschicht 20 aufbricht bzw. sich von der Trägermaterialschicht ablöst.

In Fig. 3 ist ein Dämmschichtbildner 1 gemäß einer zweiten Ausführungsform dargestellt, umfassend eine Dichtschicht 30, eine Trägermaterial-Schicht 32 und eine Selbstklebe-Schicht 34. Die Selbstklebe-Schicht 34 ist auf der Trägermaterialschicht 32 angebracht. Die Selbstklebe-Schicht 34 kann jedoch auch auf der Dichtschicht 30 angebracht sein oder beidseitig angebracht sein.

Die Selbstklebe-Schicht 34 kann vollständig auf der Trägermaterialschicht 32 aufgebracht sein oder nur partiell. Je nach Anwendungsfall kann es vorteilhaft sein, dass die Selbstklebe-Schicht 34 die Trägermaterialschicht 32 vollflächig an einem Bauelement 16 befestigt, z.B. bei Überkopfmontage des Dämmschichtbildners 1. Wenn der Dämmschichtbildner 1 bei horizontalen Fugen nur auf ein Bauelement aufgelegt wird, reicht eine Fixierung am Bauelement 16, um ein Verrutschen zu verhindern und eine spätere Feinjustage des Dämmschichtbildners 1 in Bezug zum Bauelement 16 zu ermöglichen. Beim Einlegen des Dämmschichtbildners 1 in Fugen 18, die als Nut ausgebildet sind, kann der Dämmschichtbildner 1 auch ohne Selbstklebe-Schicht 34 ausgebildet sein. Grundsätzlich kann der Dämmschichtbildner 1 auch anders an den Bauelementen 16 fixiert werden, sodass keine Selbstklebe-Schicht 34 erforderlich ist.

Die vorliegende Erfindung betrifft die Verwendung eines Dämmschichtbildners zur brandschützenden Abdichtung im Holzbau, wobei der Dämmschichtbildner eine Dichtschicht umfassend
a) 10-60 Gew.-% Blähgraphit, und
b) 20-70 Gew.-% Polyurethan-Polymer; sowie eine Trägermaterial-Schicht umfasst.

Der Begriff "Gew.-%" bezieht sich auf das Gesamtgewicht der Dichtschicht.

Der Begriff "zur brandschützenden Abdichtung" bezieht sich auf die verminderte Rauch-, Wärme-, und Sauerstoffdurchlässigkeit im Brandfall, die auf das Aufquellen des Dämmschichtbildners 1 zurückzuführen sind.

In einer bevorzugten Ausführungsform kann der Dämmschichtbildner 1 durch die folgenden Schritte erhalten werden:
(i) Bereitstellen einer Trägermaterial-Schicht,
(ii) Bereitstellen der Bestandteile der Dichtschicht als Dispersion in einem wässrigen oder organischen Lösungsmittel,
(iii) Auftragen der Bestandteile der Dichtschicht als Dispersion auf die Trägermaterial-Schicht,
(iv) Trocknung, um den Dämmschichtbildner zu erhalten, und
(iv) optional Zuschneiden des Dämmschichtbildner.

Der Dämmschichtbildner 1 kann auf einem Bewegungselement, bevorzugt einem Förderband, hergestellt werden. Der Dämmschichtbildner 1 kann einen Zwischenbereich zwischen der Trägermaterial-Schicht 22 und der Dichtschicht 20 aufweisen, in dem sich sowohl die Bestandteile der Dichtschicht 20 und des Trägermaterial 22 befinden. In diesem Zwischenbereich füllen die Bestandteile der Dichtschicht 20 die Hohlräume des Trägermaterial-Schicht 22 aus bzw. dringen in Hohlräume der Trägermaterial-Schicht 22 ein. Bei Verwendung von mineralischem Vlies oder einem Glasgelege als Trägermaterial-Schicht weist dieses Material eine Oberflächenstruktur auf, die ein Eindringen der Dichtschicht 20 bzw. des Dichtmaterials 20 in dieses Vlies bzw. Glasgelege ermöglicht. Dies gewährt eine ausreichende Haftung zwischen der Dichtschicht 20 und der Trägermaterial-Schicht 22. Bevorzugt werden die Bestandteile der Dichtschicht 20 (Dichtmaterial) auf die Trägermaterial-Schicht 22 aufgebracht und optional anschließend glattgestrichen. Es ist bevorzugt, dass die Bestandteile der Dichtschicht 20 einseitig auf die Trägermaterial-Schicht 22 aufgetragen werden.

In einer Ausführungsform sind die Dichtschicht 20 und die Trägermaterial-Schicht 22 miteinander durch eine Bindemittel-Schicht (nicht dargestellt) miteinander verklebt. Es ist jedoch bevorzugt, dass die Dichtschicht 20 auf der Trägermaterial-Schicht 22 getrocknet und/oder gehärtet wird, nachdem diese auf die Trägermaterial-Schicht 22 als Dispersion aufgetragen wurde. Hierdurch wird eine ausreichende Adhäsion zwischen der Dichtschicht 20 und der Trägermaterial-Schicht 22 gewährleistet.

In einer Ausführungsform umfasst der Dämmschichtbildner 1 keine separaten Schichten aus Trägermaterial-Schicht 22 und Dichtschicht 20. D.h. das Trägermaterial und die Bestandteile der Dichtschicht sind als einzelne Schicht ausgebildet, die sowohl das Trägermaterial und das Dichtmaterial umfasst. Daher betrifft die vorliegende Erfindung auch einen Dämmschichtbildner 1 zur brandschützenden Abdichtung im Holzbau, wobei der Dämmschichtbildner 1 ein Dichtmaterial umfassend
a) 10-60 Gew.-% Blähgraphit, und
b) 20-70 Gew.-% Polyurethan-Polymer; sowie sowie ein Trägermaterial umfasst.

In dieser Ausführungsform bezieht sich der Begriff "Gew.-%" auf das Gesamtgewicht des Dichtmaterials.

Der Blähgraphit expandiert im Brandfall und dichtetet etwaige Hohlräume im Brandfall ab. Der Blähgraphit kann in einem Bereich von 10-70 Gew.-%, bevorzugt 15-65 Gew.-%, besonders bevorzugt 20-50 Gew.-% in der Dichtschicht umfasst sein.

In einer Ausführungsform hat der Dämmschichtbildner einen Schaumfaktor von 5,0 bis 20,0. In einer Ausführungsform hat der Dämmschichtbildner einen Blähdruck von 1,0 bis 2,80 N/mm².

In einer Ausführungsform umfasst die Dichtschicht 20-70 Gew.-%, 30-55 oder 35-50 Gew.-% Polyurethan-Polymer.

In einer Ausführungsform umfasst die Trägermaterial-Schicht ein mineralisches Vlies. Das mineralische Vlies ist bevorzugt ein Glasgelege. In einer Ausführungsform umfasst die Trägermaterial-Schicht ein mineralisches Gewebe. Das mineralische Gewebe ist bevorzugt ein Glasfasergewebe. In einer bevorzugten Ausführungsform umfasst die Trägermaterial-Schicht ein Glasfasergewebe oder ein Polyestervlies und ein Glasgelege.

Es wurde überraschenderweise gefunden, dass Glasfasergewebe oder Polyestervlies und/oder Glasgelege eine besonders effiziente und rutschfeste Montage des Dämmschichtbildners auf diversen Holzunterlagen ermöglicht.

In einer Ausführungsform umfasst die Dichtschicht weiterhin
c) 5-20 Gew.-% Copolymer erhältlich aus Vinylacetat, Ethylen und Acrylsäureester. In einer Ausführungsform umfasst die Dichtschicht weiterhin
c) 5-20 Gew.-% Copolymer erhältlich aus einer Mischung umfassend Vinylacetat und Ethylen.

Das Copolymer erhältlich aus Vinylacetat, Ethylen und Acrylsäureester dient unter anderem als Bindemittel. In einer Ausführungsform umfasst die Dichtschicht 5-20 Gew.-%, 7-16 Gew.-% oder 9-14 Gew.-% Copolymer erhältlich aus Vinylacetat, Ethylen und Acrylsäureester. Der Begriff Acrylsäureester umfasst auch Acrylsäurederivate.

In einer Ausführungsform umfasst die Dichtschicht weiterhin
d) 5-20 Gew.-% Acrylnitril- Butadien-Kautschuk, und
e) 2- 15 Gew.-% amorphes Silica.

Der Acrylnitril-Butadien-Kautschuk dient als Kohlenstoffbildner und führt zu einer weiteren Expansion der Dichtschicht. Das amorphe Silica dient als nicht-brennbarer Füllstoff. In einer Ausführungsform umfasst die Dichtschicht 2-15 Gew.-%, 3-10 oder 4-8 Gew.-% eines nicht-brennbaren Füllstoffs. Der Füllstoff kann Silica, Talkum, Titandioxid, Aluminiumhydroxid, Feldspat, Kaolin, Mica, Calciumcarbonat, Wollastonit, Ruß und Mischungen davon sein.

In einer Ausführungsform umfasst die Dichtschicht 0,1-3 Gew.-%, 0, 3-2 Gew.-% oder 0,4-1 Gew.- % Ruß.

In einer Ausführungsform umfasst die Dichtschicht 0,2-7 Gew.-%, 3-6,5 Gew.-% oder 3,5-6,3 Gew.-% Flammschutzmittel. Flammschutzmittel können aus der Gruppe von halogenierten Verbindungen, Phosphor-Verbindungen, anorganischen Salzen, Stickstoff-Verbindungen und Mischungen davon ausgewählt werden. Es ist bevorzugt, dass das Flammschutzmittel keine halogenierte Verbindung umfasst. Halogenierten Verbindungen können aus der Gruppe von bromierten Phosphorsäureestern, (cyclo)aliphatischen Bromverbindungen (z.B. Hexabromcyclododecan (HBCD)) und aromatische Bromverbindungen (z.B. polybromierte Diphenylether (PBDEs), Tetrabrombisphenal A (TBBPA), bromierten Polystyrole, bromierten Phenolen und Tretrabromphthalsäureanhydrid ausgewählt werden. Phosphor-Verbindungen können aus der Gruppe von Phosphatestern, Phosphaten, Phosphonaten, Phosphinaten und Ammoniumpolyphosphaten ausgewählt werden. Anorganische Salze können Aluminiumhydroxid oder Magnesiumhydroxid sein. Stickstoff-Verbindungen können aus der Gruppe von Melamin, Melaminpolyphosphat und Melamincyanurat ausgewählt werden. Bevorzugt wird das Flammschutzmittel aus der Gruppe von organischem Phosphat, rotem Phosphor, Ammoniumpolyphosphat, Ammoniumphosphat, Ammoniumdihydrogenphosphat und Mischungen davon ausgewählt.

Der Dämmschichtbildner hat bevorzugt die Form einer Bahn oder eines Bandes. Eine solche Bahn hat bevorzugt eine flächenbezogene Masse von 1,30 bis 2,30 kg/m². Die Dichtschicht kann eine Dichte von 800-1200 kg/m³, 850-1100 kg/m³ oder 950-1050 kg/m³ aufweisen. Diese Bahn kann aufgerollt werden, sodass eine einfache Lagerung und ein einfacher Transport des Dämmschichtbildners ermöglicht wird.

In einer bevorzugten Ausführungsform weist die Trägermaterial-Schicht dieselbe Länge und Breite wie die Dichtschicht auf, d.h. die Dichtschicht deckt die Trägermaterial-Schicht einseitig vollständig ab und die Schichten schließen bündig ab. Es ist jedoch auch möglich, dass die Dichtschicht jeweils einen Randbereich der Bahn des Trägermaterials nicht abdeckt. Andererseits kann die Trägermaterial-Schicht nachdem sie mit der Dispersion des Dichtmaterials beschichtet wurde und dieser getrocknet und ausgehärtet ist, an ihren Rändern so konfektioniert oder beschnitten werden, dass das Dichtmaterial bzw. die Dichtschicht 20 den Rand des Trägermaterials 22 vollständig bedeckt.

In einer Ausführungsform hat die Bahn eine Dicke von 0,5 bis 3,0 mm, 1,30 bis 2,30 mm oder 1,50 bis 2,00 mm. Die Breite und Länge des Dämmschichtbildners kann nach Bedarf zugeschnitten werden. Bevorzugt hat der Dämmschichtbildner eine Breite von 10 bis 1000 mm.

In einer Ausführungsform wird der Dämmschichtbildner in einem Zwischenraum oder einer Fuge zwischen zwei Bauelementen angebracht, wobei mindestens ein Bauelement ein Holzelement ist. In einer bevorzugten Ausführungsform umfassen beide Bauelemente jeweils ein Holzelement. Die Bauelemente sind bevorzugt Massivbauteile, besonders bevorzugt zur Herstellung einer Wand oder Decke. Der Zwischenraum oder die Fuge kann in Verblockungen, wie Stoß-, Nut-, Falz-, und Zapfenverbindungen, auftreten. Der Dämmschichtbildner 1 wird entlang der Fuge eingebracht, so dass sich keine Öffnungen zwischen den verbundenen Holzbauelementen ergeben. Im Brandfall schäumt der Dämmschichtbildner 1 die Fuge aus und verhindert somit, dass ein Luftzug entsteht, der dem Feuer Sauerstoff liefert oder dass eine Angriffsfläche für die Flammen entsteht. Solange das Feuer bzw. die Flammen nur auf geschlossene Flächen treffen zeigt Holz eine sehr hohe Brandfestigkeit.

Der Begriff "Holzelement" ist als ein Bauteil aus Holz zu verstehen. Das Bauteil aus Holz kann natürliches Holz, wie Laubholz oder Nadelholz, oder Holzzellulose umfassen. Bevorzugt besteht das Holzelement aus Holz, besonders bevorzugt aus Massivholz wie Brettsperrholz. In einer Ausführungsform umfasst das Holzelement mehr als 70 Gew.-%, mehr als 80 Gew.-% oder mehr als 90 Gew.-% Holz. In einer Ausführungsform kann das Holzelement 30 Gew.-%, 20.- Gew.-% oder 10 Gew.-% andere Bestandteile enthalten, die nicht Holz sind. In einer Ausführungsform kann das Holzelement eine Spanplatte sein. Es ist bevorzugt, dass das Holzelement die Feuerwiderstandsklasse EI 30, bevorzugt EI 60, besonders bevorzugt EI 90, gemessen nach EN-1366-4, erfüllt.

In einer Ausführungsform umfasst der Dämmschichtbildner eine Selbstklebe-Schicht, bevorzugt aus Polyacrylat. Die Dichtschicht ist bevorzugt einseitig aufgebracht, sodass der Dämmschichtbildner in der folgenden Reihenfolge aufgebaut ist: Selbstklebe-Schicht, Trägermaterial-Schicht, Dichtschicht. Die Selbstklebe-Schicht oder -Folie erlaubt ein einfaches Anbringen in vertikalen Fugen oder Zwischenräumen auch überkopf. Die Selbstklebefolie hat bevorzugt eine Dicke von 0,05 bis 0,3 mm, besonders bevorzugt von 0,1 bis 0,2 mm. Der Dämmschichtbildner kann eine Abdeck-Schicht, bevorzugt aus Papiervlies oder Silikonpapier, umfassen, wobei die Abdeck-Schicht vor Gebrauch entfernbar ist.

Der Dämmschichtbildner kann in vertikalen Fugen, z.B. zwischen zwei Wänden, oder in horizontalen Fugen, z.B. zwischen Decke und Wand, verwendet werden. Die Fugen sind bevorzugt Stufenfugen oder lineare Stoßfugen. Die Fugen weisen bevorzugt einen Abstand von bis zu 15 mm auf, besonders bevorzugt von 3 mm bis 15 mm.

Der Begriff "Abstand" bezieht sich auf die durchschnittliche Distanz zwischen den zwei Bauelementen, d. h. der Abstand der Fuge bezieht sich auf die Fugenbreite.

In einer Ausführungsform wird weiterhin eine Polyethylen Fugenschnur verwendet. Eine solche Fugenschnur kann zu einer verbesserten brandschützenden Wirkung führen.

In einer Ausführungsform umfasst der erfindungsgemäße Dämmschichtbildner eine Dichtschicht umfassend
a) 10-60 Gew.-% Blähgraphit, und
b) 20-70 Gew.-% Polyurethan-Polymer,
c) optional 5-20 Gew.-% Copolymer erhältlich aus Vinylacetat, Ethylen und Acrylsäureester;
sowie eine Trägermaterial-Schicht umfassend Polyestervlies und Glasgelege.

Eine besonders bevorzugte Ausführungsform betrifft die Verwendung eines Dämmschichtbildners, wobei der Dämmschichtbildner in einem Zwischenraum oder einer Fuge zwischen zwei Bauelementen angebracht wird, wobei mindestens ein Bauelement ein Holzelement ist, wobei der Zwischenraum oder die Fuge einen Abstand von bis zu 15 mm aufweist, und wobei der Dämmschichtbildner eine Dichtschicht umfassend
a) 10-60 Gew.-% Blähgraphit,
b) 20-70 Gew.-% Polyurethan-Polymer,
c) optional 5-20 Gew.-% Copolymer erhältlich aus Vinylacetat, Ethylen und Acrylsäureester,
d) 5-20 Gew.-% Acrylnitril- Butadien-Kautschuk,
e) 2- 15 Gew.-% amorphes Silica,
f) 0,1-3 Gew.-% Ruß, und
g) 0,2-7 Gew.-% Flammschutzmittel;
sowie eine Trägermaterial-Schicht umfassend Glasfasergewebe oder Glasgelege umfasst.

Eine Ausführungsform betrifft eine Anordnung umfassend einen Dämmschichtbildner und ein Holzelement, wobei der Dämmschichtbildner eine Dichtschicht umfasst und die Dichtschicht folgende Bestandteile aufweist
a) 10-60 Gew.-% Blähgraphit,
b) 20-70 Gew.-% Polyurethan-Polymer, und
c) optional 5-20 Gew.-% Copolymer erhältlich aus Vinylacetat, Ethylen und Acrylsäureester; sowie eine Trägermaterial-Schicht umfasst, wobei der Dämmschichtbildner auf dem Holzelement angebracht ist.

Der Dämmschichtbildnern kann durch eine Selbstklebe-Schicht und/oder durch Heftklammern an dem Holzelement angebracht werden.

In einer Ausführungsform erfüllt die erfindungsgemäße Anordnung die Feuerwiderstandsklasse EI 30, bevorzugt EI 60, besonders bevorzugt EI 90, gemessen nach EN-1366-4.

In einer Ausführungsform umfasst die Anordnung ein Bauelement, das so angeordnet ist, dass sich eine Fuge oder Zwischenraum zwischen dem Bauelement und dem Holzelement bildet; wobei der Dämmschichtbildner in der Fuge oder dem Zwischenraum angebracht ist. Die brandschützende Wirkung des Dämmschichtbildners wird unabhängig von der Positionierung der Fuge zu einem etwaigen ausbrechenden Brand gewährleistet, wobei eine mittige Positionierung bevorzugt ist. Eine brandschützende Wirkung wird sowohl auf der feuerzugewandten Seite, feuerabgewandten Seite oder bei einer mittigen Positionierung in der Fuge erzielt. Es ist besonders bevorzugt, dass der Dämmschichtbildner zentral in der Fuge angebracht wird. Dies gewährleistet einen besonders zuverlässigen Brandschutz. In einer vertikalen Fuge ist es somit bevorzugt, dass der Dämmschichtbildner vertikal zentral, d.h. auf mittlerer Höhe, angebracht ist oder in vertikaler Richtung die Fuge vollständig ausfüllt. In einer horizontalen Fuge ist es somit bevorzugt, dass der Dämmschichtbildner horizontal zentral, d.h. auf mittlerer Breite, angebracht ist oder in horizontaler Richtung die Fuge vollständig ausfüllt.

In einer Ausführungsform beträgt der Abstand der Fuge oder des Zwischenraums maximal 15 mm und der Dämmschichtbildner weist eine Dicke von 0,5 bis 3 mm auf. In einer Ausführungsform füllt der Dämmschichtbildner den Zwischenraum oder die Fuge nur teilweise aus.

Nachfolgend sind Beispiele beschrieben:
Beispiel 1: Verwendung eines Dämmschichtbildners (1) zur brandschützenden Abdichtung im Holzbau, wobei der Dämmschichtbildner (1) umfasst:
   eine Dichtschicht (20) umfassend
      a) 10-60 Gew.-% Blähgraphit, und
      b) 20-70 Gew.-% Polyurethan-Polymer; sowie
   eine Trägermaterial-Schicht (22).
Beispiel 2: Verwendung nach Beispiel 1, wobei die Trägermaterial-Schicht (22) Glasfasergewebe oder Polyestervlies und Glasgelege umfasst.
Beispiel 3: Verwendung nach Beispiel 1 oder 2, wobei die Dichtschicht (20) weiterhin wenigstens einen der folgenden Bestandteile aufweist:
   c) 5-20 Gew.-% Copolymer erhältlich aus Vinylacetat, Ethylen und Acrylsäureester,
   d) 5-20 Gew.-% Acrylnitril- Butadien-Kautschuk, und
   e) 2- 15 Gew.-% amorphes Silica umfasst.
Beispiel 4: Verwendung nach einem der Beispiele 1 bis 3, wobei der Dämmschichtbildner (1) in einem Zwischenraum oder einer Fuge (18) zwischen zwei Bauelementen (16a, 16b) angebracht wird, insbesondere wobei mindestens ein Bauelement (16a, 16b) ein Holzelement ist.
Beispiel 5: Verwendung nach einem der Beispiele 1 bis 4, wobei der Dämmschichtbildner (1) eine Selbstklebe-Schicht (34), bevorzugt aus Polyacrylat oder umfassend Polyacrylat, umfasst.
Beispiel 6: Dämmschichtbildner umfassend eine Dichtschicht (20) umfassend:
   a) 10-60 Gew.-% Blähgraphit, und
   b) 20-70 Gew.-% Polyurethan-Polymer;
   sowie eine Trägermaterial-Schicht (22) umfassend ein Vlies und/oder ein Gelege, insbesondere Polyestervlies und/oder Glasgelege.
Beispiel 7: Anordnung umfassend einen Dämmschichtbildner (1) und ein Holzelement (16a, 16b), wobei der Dämmschichtbildner (1) umfasst:
   eine Dichtschicht (20) umfassend
      a) 10-60 Gew.-% Blähgraphit, und
      b) 20-70 Gew.-% Polyurethan-Polymer; sowie
   eine Trägermaterial-Schicht (22),
   wobei der Dämmschichtbildner (1) auf dem Holzelement (16a, 16b) angebracht ist.
Beispiel 8: Anordnung nach Beispiel 7, weiterhin umfassend:
   ein Bauelement (16a, 16b), das so angeordnet ist, dass sich eine Fuge (18) oder Zwischenraum zwischen dem Bauelement (16a, 16b) und dem Holzelement (16a, 16b) bildet; und
   wobei der Dämmschichtbildner (1) in der Fuge (18) oder dem Zwischenraum angebracht ist.
Beispiel 9: Anordnung nach Beispiel 8, wobei der Abstand der Fuge (18) oder des Zwischenraums maximal 10 mm beträgt und der Dämmschichtbildner (1) eine Dicke von 0,5 bis 3 mm aufweist.
Beispiel 10: Anordnung nach Beispiel 8 oder 9, wobei der Dämmschichtbildner (1) den Zwischenraum oder die Fuge (18) nur teilweise ausfüllt.

## Patentansprüche

1. Verwendung eines Dämmschichtbildners (1) zur brandschützenden Abdichtung im Holzbau, wobei der Dämmschichtbildner (1) umfasst:
eine Dichtschicht (20) umfassend
a) 10-60 Gew.-% Blähgraphit, und
b) 20-70 Gew.-% Polyurethan-Polymer; sowie
eine Trägermaterial-Schicht (22),
wobei die Dichtschicht (20) weiterhin aufweist:
c) 5-20 Gew.-% Copolymer erhältlich aus Vinylacetat, Ethylen und Acrylsäureester, und/oder
d) 5-20 Gew.-% Acrylnitril-Butadien-Kautschuk.

2. Verwendung nach Anspruch 1, wobei die Trägermaterial-Schicht (22) Glasfasergewebe oder Polyestervlies und Glasgelege umfasst.

3. Verwendung nach Anspruch 1 oder 2, wobei die Dichtschicht (20) weiterhin aufweist:
e) 2- 15 Gew.-% amorphes Silica umfasst.

4. Verwendung nach einem der Ansprüche 1 bis 3, wobei der Dämmschichtbildner (1) in einem Zwischenraum oder einer Fuge (18) zwischen zwei Bauelementen (16a, 16b) angebracht wird, und wobei mindestens ein Bauelement (16a, 16b) ein Holzelement ist.

5. Verwendung nach einem der Ansprüche 1 bis 4, wobei der Dämmschichtbildner (1) eine Selbstklebe-Schicht (34), bevorzugt aus Polyacrylat, umfasst.

6. Dämmschichtbildner umfassend eine Dichtschicht (20) umfassend:
a) 10-60 Gew.-% Blähgraphit, und
b) 20-70 Gew.-% Polyurethan-Polymer;
sowie eine Trägermaterial-Schicht (22) umfassend Polyestervlies und Glasgelege,
wobei die Dichtschicht (20) weiterhin aufweist:
c) 5-20 Gew.-% Copolymer erhältlich aus Vinylacetat, Ethylen und Acrylsäureester, und/oder
d) 5-20 Gew.-% Acrylnitril-Butadien-Kautschuk.

7. Anordnung umfassend einen Dämmschichtbildner (1) und ein Holzelement (16a, 16b), wobei der Dämmschichtbildner (1) umfasst:
eine Dichtschicht (20) umfassend
a) 10-60 Gew.-% Blähgraphit, und
b) 20-70 Gew.-% Polyurethan-Polymer; sowie
eine Trägermaterial-Schicht (22),
wobei der Dämmschichtbildner (1) auf dem Holzelement (16a, 16b) angebracht ist, wobei die Dichtschicht (20) weiterhin aufweist:
c) 5-20 Gew.-% Copolymer erhältlich aus Vinylacetat, Ethylen und Acrylsäureester, und/oder
d) 5-20 Gew.-% Acrylnitril-Butadien-Kautschuk.

8. Anordnung nach Anspruch 7, weiterhin umfassend:
ein Bauelement (16a, 16b), das so angeordnet ist, dass sich eine Fuge (18) oder Zwischenraum zwischen dem Bauelement (16a, 16b) und dem Holzelement (16a, 16b) bildet; und
wobei der Dämmschichtbildner (1) in der Fuge (18) oder dem Zwischenraum angebracht ist.

9. Anordnung nach Anspruch 8, wobei der Abstand der Fuge (18) oder des Zwischenraums maximal 10 mm beträgt und der Dämmschichtbildner (1) eine Dicke von 0,5 bis 3 mm aufweist.

10. Anordnung nach Anspruch 8 oder 9, wobei der Dämmschichtbildner (1) den Zwischenraum oder die Fuge (18) nur teilweise ausfüllt.
